# EUROPEAN PATENT APPLICATION

(11) **EP 2 815 825 A1**
(43) Date of publication of application: **24.12.2014**
(21) Application number: 13173616.7
(22) Date of filing: 25.06.2013
(51) Int. Cl.: B23B 27/16

(54) **Multi-clamp insert and toolholder assembly**

(30) Priority: 30.05.2013 WO PCT/US2013/905635
(71) Applicant: Eines Canela S.A., 08915 Badalona (ES)
(72) Inventor: Canela, Silvia, 08915 BADALONA (ES)

(57) **Abstract**

A mechanical clamping tool holder for indexable inserts includes a tool holder body and complementary clamping mechanisms. The tool holder body accommodates several novel clamping mechanism types as well as other common clamping mechanisms. The tool holder body includes an insert pocket, and a complementary clamp pocket to assemble several clamping mechanisms that engage and clamp the inserts in the working position. The insert receiving pocket also includes a threaded bore to secure the shim seat and the clamp pocket includes a threaded bore for securing the clamping mechanisms.

## Description

### BACKGROUND OF THE INVENTION

### Field of the Invention

The present invention relates to the field of tool holders, and more particularly to a tool holder that accommodates a variety of cutting inserts held in position by a variety of clamping mechanisms.

### DESCRIPTION OF THE RELATED ART

The prior art includes a variety of diverse tool holders. For example, The AISI tool holder mechanisms utilize a conical bore whose axis is offset from the insert threaded section. This conical bore tilt the locking pin into abutment with the cutting insert into a central bore. This threaded bore also clamps a screw to screw down the shim seat when the locking pin is not used.

These prior art tool holder constructions are adequate for the purpose and function for which they are specifically designed. However, they are uniformly deficient with respect to their failure to provide a simple, efficient and practical tool holder that accommodates a variety of cutting inserts.

As a consequence of the foregoing situation, there have existed a longstanding need for a new and improved tool holder and the provision of such a construction is a stated objective of the present invention.

### BRIEF SUMMARY OF THE INVENTION

The present invention presents a tool holder which utilizes cutting inserts with or without a central bore, allowing the use of several clamping mechanisms using only one insert pocket formed at a forward end thereof. Such new tool holder type permits the use of special clamping mechanisms for ceramic inserts without a central bore, and also the use of clamping mechanisms having a protuberance on the front for securing cutting inserts with a central bore.

The invention presents a tool holder body for clamping an insert within an insert pocket formed at a forward end thereof and having a bottom and at least one side wall for receiving the insert. The tool holder also includes a clamp pocket disposed on the rear side of the insert pocket which accommodates the use of several clamping mechanisms. Each clamping mechanism includes a nose portion with a downward extending nub having a central axis forming an angle with respect to the plane of the tool holder. The clamping mechanism is secured by a screw and by the protuberances which adapt them to the particular and innovating tool holder's shape. The clamping mechanism includes a top surface, a forward lower face and a rearward lower face, and an aperture formed therethrough. A clamp screw inserted through the aperture of the clamping mechanism is received in the clamp-securing bore of the tool holder body to bring the clamp into pressing engagement with the insert, wherein only the nub of the nose portion of the clamp engages a rearward inside surface of the mounting bore of the insert, and wherein only the forward lower face of the nose portion engages a top surface of the insert when the clamp is brought into pressing engagement with the insert. In one embodiment of the clamping mechanism, a coil spring surrounds the clamp screw and is compressed between the clamp and the tool holder to bias the clamp away from the tool holder. An end of the coil spring extends into the bore. The bore is inclined obliquely with respect to a central axis of the screw such that the end of the spring pushes against a rear portion of a wall of the bore to apply a rearward force to the clamp.

### BRIEF DESCRIPTION OF SEVERAL VIEWS OF THE DRAWINGS

These and other attributes of the invention will become more clear upon a thorough study of the following description of the best mode for carrying out the invention, particularly when reviewed in conjunction with the drawings, wherein:
FIG. 1 is a perspective view of the tool holder body showing the insert pocket and the clamp pocket;
Fig. 2 is an enlarged perspective view of the insert pocket and the clamp pocket;
Fig. 3 is an exploded perspective view of the tool holder configured to clamp flat inserts in accordance with an embodiment of the invention;
Fig. 3A is a perspective view thereof showing the components in an assembled configuration;
Fig. 4 is an exploded perspective view of the tool holder configured to clamp center hole inserts in accordance with another embodidment of the invention;
Fig. 4A a perspective view thereof showing the components in an assembled configuration;
Fig. 5 is an exploded perspective view of the tool holder configured to accommodate a standard clampling mechanism; and
Fig. 5A a perspective view thereof showing the components in an assembled configuration.

The invention will now be described more in detail by reference to the enclosed drawings which illustrate a preferred embodiment of the invention.

### DETAILED DESCRIPTION OF THE INVENTION

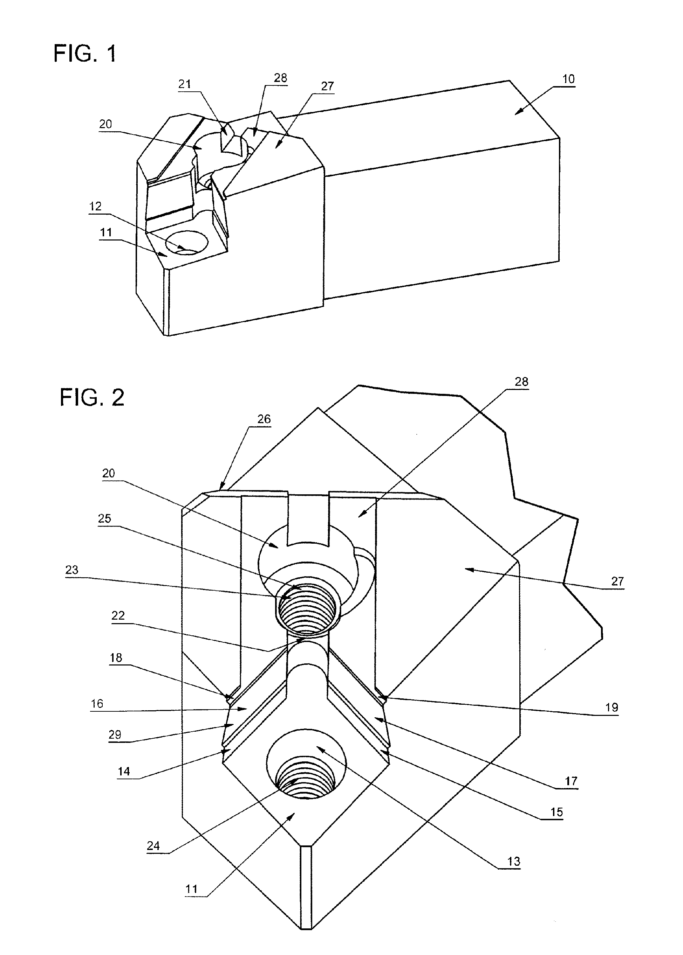

Referring now to FIGS. 1 and 2, a tool holder body (10) is shown, where the forward nose portion is provided with a pocket (11) for the receipt of an indexable cutting insert. This insert-receiving pocket (11) shows a central bore (12) within a conical off-centered part (13). The walls (14) and (15) support the shim seat. Moreover, the two side support surfaces (16) and (17) hold the insert while using the tool. The angle on the superior part of the cavity (18) and (19) prevents the insert edges from getting damaged. Spaced back from the insert receiving pocket (11) is a clamp pocket (20) aimed to secure several clamping mechanism types. The clamp pocket (20) shows two slots (21) and (22) which guarantee the alignment of the clamps with the insert. The clamp pocket (20) has a threaded bore (23) wherein the clamp screws are received. The flat area of the insert-receiving pocket (11) is parallel to the clamp pocket (20) in which the clamping mechanisms are placed. The bore (12) of the insert-receiving pocket (11) presents a thread (24) identical to the clamp pocket bore thread (25). The tool's head and its pockets (11) and (20) lodge the insert. The indexable insert and the clamps are disposed in different planes but they are always parallel to each other. On the rear part (26) of the tool's head is a slope which acts to hold and to align one of the clamping mechanism types. The superior part (27) of the tool holder (10) has a low cut (28) that allows the placing of a clamp within a solid carbide chipbreaker for the holding of ceramic inserts. The insert-receiving pocket (11) presents a less than three degrees wall (29) which guarantee the placing of the insert superior part against the pocket's part.

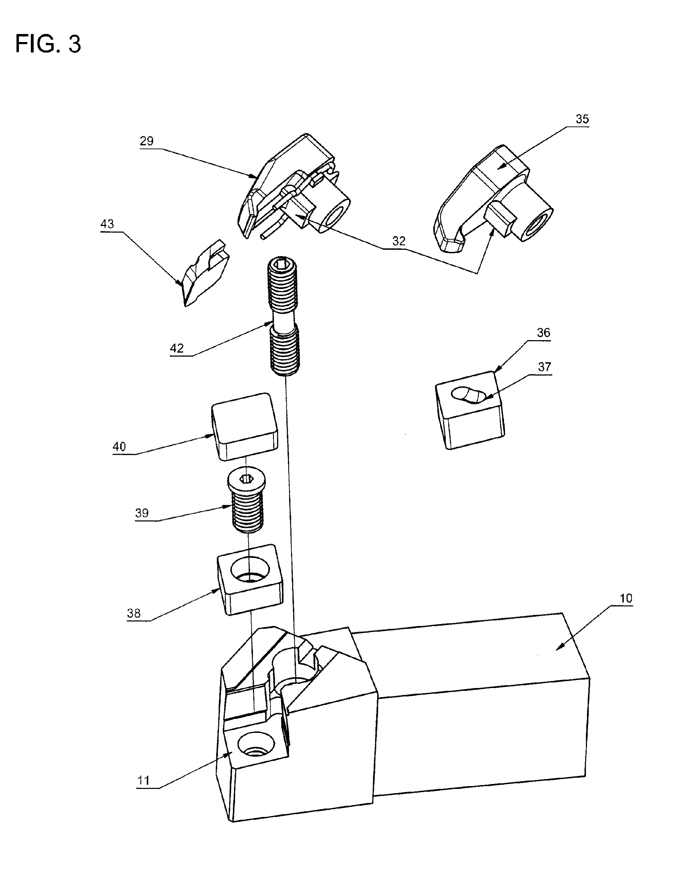

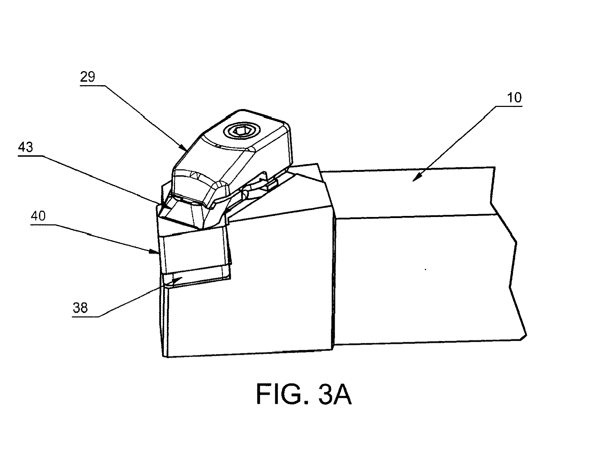

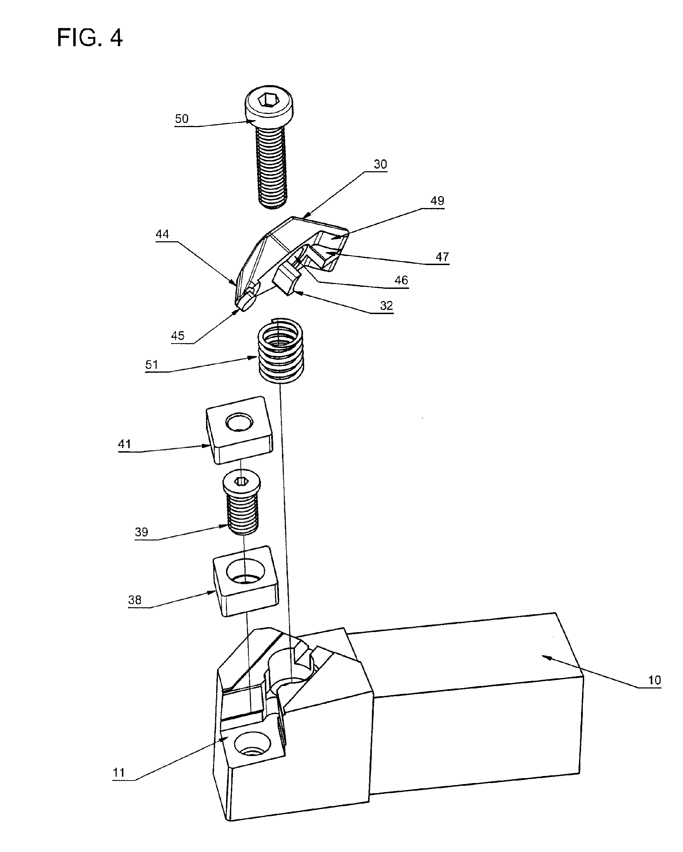

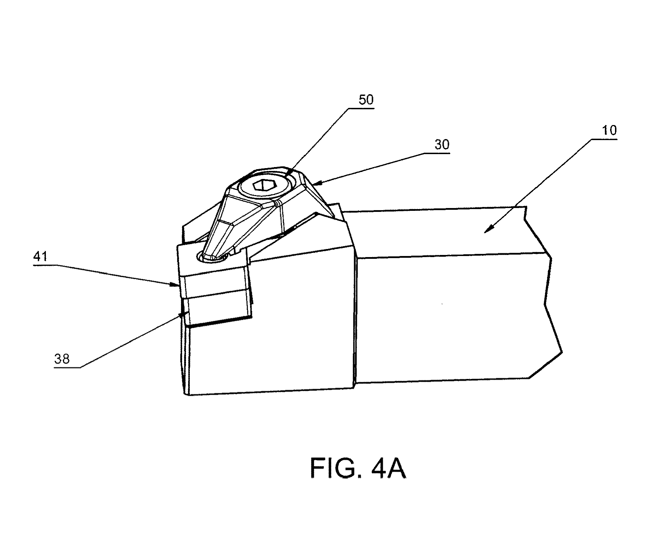

Referring now to FIG. 3 and 4, the different clamping mechanism types are shown according to embodiments of the invention. The parts composing this invention are basically the tool holder body with its insert pocket (11), and clamp pocket (20), component parts for all insert types including insert shims and all corresponding clamping mechanisms.

The main innovation concerning the clamps, is the double front and back alignment, clamps presenting a frontal protrusion only are aimed to hold inserts with a central hole, using the clamp's guide located between the clamp screw and the insert-receiving pocket (11).

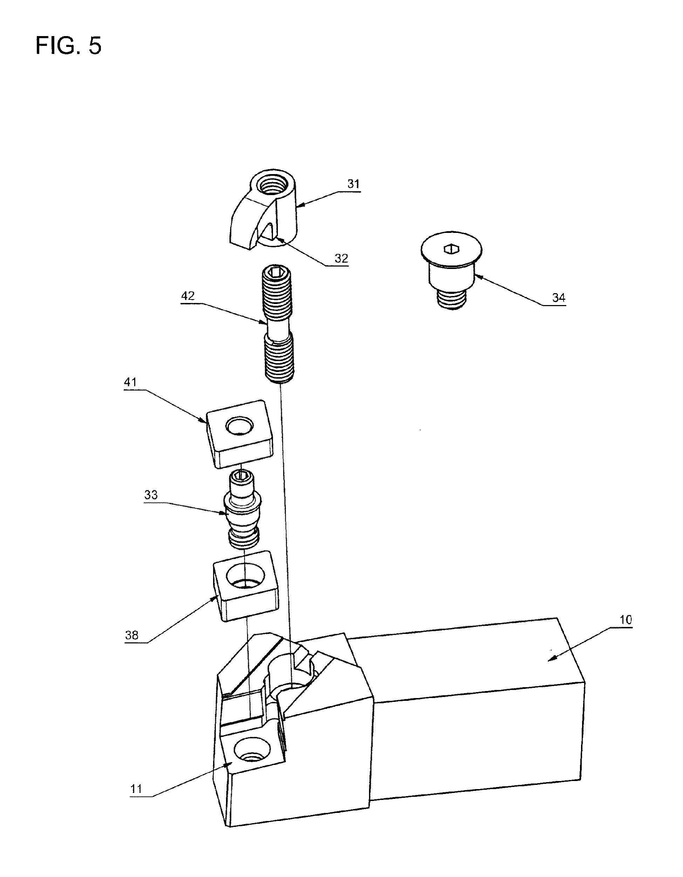

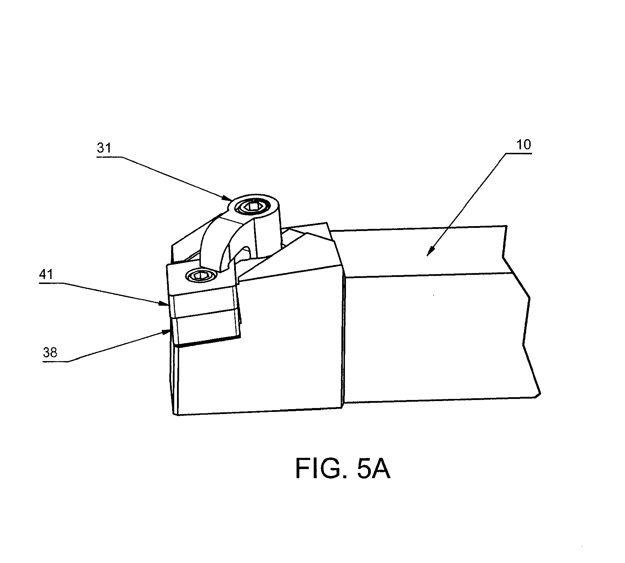

The clamp for ceramic inserts (29) (Fig. 3), as the clamp for inserts with a central hole (30) (Fig. 4), the traditional clamp (31) (Fig. 5), all have a frontal protuberance (32) which is one of the compounds of the clamp's body and it is located between the clamp's bore (23) and the insert-receiving pocket (11). This frontal protuberance (32) is one of the main parts of this invention and secures a perfect alignment within indexable inserts when mounting clamps (29) and (30) are used.

The tool body also holds the insert with a traditional central pin (33) (Fig. 5), so the bolt (34) will be used to cover the clamps' hole. This bolt also avoids the insertion of chips when only using the pin (33).

Within the clamp for ceramic inserts (29) (Fig. 3), a carbide chipbreaker (43) can also be used for the flat inserts. Another clamp type (35) can be used for ceramic or cermet inserts (36) which have a central cavity (37) that assures the perfect holding of this kind of indexable insert.

The insert shim (38) is always the same, it can be sized by the pin (33) within the traditional system (Fig. 5), or sized by the screw (39) of the clamps (29) and (35) (Fig. 3) which are used for ceramic inserts (40) and also sized by the clamps (30) (Fig. 4) used for carbide inserts with hole (41).

The screw (42) that sizes the clamps for ceramic inserts (29) and (35) has a double thread; the one right threaded into the tool body (10) and the clamp thread (29) and (35), which is threaded to the left.

The clamp (30) (Fig. 4) for inserts with hole (41) has got a tip (44) that has a cylindrical part (45), which stays inside of the insert hole (41). This clamp (30) has a tab (32) placed between the clamp hole (46) and the insert pocket. It also has a tab (47) at the back that fits into the groove (21) of the tool body (20). The clamp (30) also has a slope (49) that fits to the slope (26) of the tool body.

The clamp set (30) is complemented by a screw (50) and a spring (51) that allows the clamp (30) to release the insert (41) when the screw (50) is loosened. By assembling the parts (30), (50) and (51), together with the insert (41), the screw (39) and the shim seat (38) on the tool body (10), inside the pocket (11) and the clamp pocket (20), they form the clamping system of Figure 4.

The spring (51) that surrounds the screw (50) presses the inside of the clamp pocket (20) and the low part of the clamp (30) around the hole (46). Thus, by loosening the screw (50), the tip of the clamp (30) goes out of the hole of the insert (41), because the surface of the low part of the clamp (30) and the inside of the hole (46) have a slope that forces it to follow the inclination, by raising firstly the tip then the back of the clamp.

In summary, the invention allows the assembly of the traditional clamping system in their two versions: only with the pin (33), or with the clamp (31) and the pin (33) (Fig. 5). Another embodiment uses the clamps for ceramic inserts in their two versions: the clamp for the flat insert (29) with a chipbreaker (43), and the clamp for the insert with a cavity (35) (Fig. 3). The other embodiment is the assembly for inserts with the hole (41) with a clamp with a tip (30) that allows clamping of the inserts with the hole (41).

Although only exemplary embodiments of the invention have been described in detail above, those skilled in the art will readily appreciate that many modifications are possible without materially departing from the novel teachings and advantages of this invention. Accordingly, all said modifications are intended to be included within the scope of this invention as defined in the following claims.

## Claims

1. A tool holder, comprising:
a tool holder body including a forward portion;
an insert pocket formed in the forward portion, the insert pocket being disposed to receive a cutting insert;
a clamp pocket spaced back from the insert pocket, the clamp pocket being disposed to receive a clamping mechanism having an elongated nose portion that extends from the clamp pocket to the insert pocket, and a downwardly extending nub that operably engages and secures the cutting insert in the insert pocket.

2. The tool holder of claim 1, further including a first slot formed in the tool holder body spaced back from the clamp pocket, and a second slot formed in the tool holder body between the clamp pocket and the insert pocket, wherein the first and second slots receive a portions of the clamping mechanism and align the elongated nose portion with a center portion of the cutting insert.

3. The tool holder of claim 2, wherein the cutting insert has a central cavity.

4. The tool holder of claim 3, wherein the clamping mechanism has a tab at a distal end of the elongated nose portion disposed to be received into the central cavity of the cutting insert.

5. The tool holder of claim 4, wherein the elongated nose portion is biased away from the cutting insert by a spring.

6. The tool holder of claim 2, wherein the cutting insert has a central flat surface.

7. The tool holder of claim 6, wherein the clamping mechanism has a distal end of the elongated nose portion disposed to operably engage the central flat surface of the cutting insert.

8. The tool holder of claim 7, wherein a chipbreaker is disposed between the distal end of the elongated nose portion and the central flat surface of the cutting insert.
